# EUROPEAN PATENT APPLICATION

(11) **EP 4 685 987 A1**
(43) Date of publication of application: **28.01.2026**
(21) Application number: 25152641.4
(22) Date of filing: 17.01.2025
(51) Int. Cl.: H01M 50/534, H01M 10/054, H01M 4/58, H01M 4/136, H01M 4/133, C01B 25/45

(54) **POSITIVE ELECTRODE ACTIVE MATERIAL, SODIUM-ION BATTERY AND PREPARATION METHOD THEREFORE AND ELECTRICAL DEVICE**

(30) Priority: 25.07.2024 CN 202411002439
(71) Applicant: Shenzhen Bak Power Battery Co., Ltd., Shenzhen, Guangdong 518000 (CN)
(72) Inventor: CHEN, Liuling, SHENZHEN, GUANGDONG, 518000 (CN); HU, Mingchang, SHENZHEN, GUANGDONG, 518000 (CN); LI, Fengmei, SHENZHEN, GUANGDONG, 518000 (CN); ZENG, Siyuan, SHENZHEN, GUANGDONG, 518000 (CN); CHEN, Hao, SHENZHEN, GUANGDONG, 518000 (CN); PENG, Chengbin, SHENZHEN, GUANGDONG, 518000 (CN); YU, Pei, SHENZHEN, GUANGDONG, 518000 (CN)
(74) Representative: Gamba, Alessandro

(57) **Abstract**

The present invention provides a positive electrode active material, a sodium-ion battery and a preparation method therefor and an electrical device, relating to the technical field of secondary batteries. The positive electrode active material includes a polyanionic material and Na₄Fe₃(PO₄)₂P₂O₇, a mass of the Na₄Fe₃(PO₄)₂P₂O₇ being 40% to 60% of a mass of the positive electrode active material. In the present invention, the polyanionic material and Na₄Fe₃(PO₄)₂P₂O₇ are compounded as the positive electrode active material. The two materials cooperate with each other, so that the positive electrode active material has a high diffusion coefficient of Na⁺, a high energy density and excellent cycle stability at a low temperature, which is beneficial to improving the low-temperature service performance of the sodium-ion battery.

## Description

### TECHNICAL FIELD

The present invention relates to the technical field of secondary batteries, and particularly to a positive electrode active material, a sodium-ion battery and a preparation method therefor and an electrical device.

### BACKGROUND ART

With the rapid increase in demand for two-wheeled electric vehicles, the demand for a core component, battery, of the electric two-wheeled vehicles also rises accordingly. At present, rechargeable lithium-ion batteries (LIBs) are widely applied in portable electronic devices and electric vehicles due to their long service lifetime and high energy density. However, lithium reserves are limited, which hinders the development of the lithium-ion batteries, while sodium-ion batteries (SIBs) attract wide attention due to high richness and general distribution of sodium resources. The sodium-ion batteries have characteristics such as light weight, moderate specific energy, low cost, wide operating temperature, and high safety, and have obvious application advantages in the two-wheeled electric vehicles.

However, electrochemical performance (including capacity, efficiency and energy/power density) of the sodium-ion batteries significantly gets worse when temperature is decreased. When an operating temperature falls to 0 °C or below, the performance of the batteries will deteriorate.

Low-temperature resistance of the sodium-ion batteries is crucial to meet practical application requirements of extreme weather and different regions (e.g., North China). However, the sodium-ion batteries currently have poor low-temperature resistance; therefore, it is necessary to improve it.

### SUMMARY

The present invention aims at providing a positive electrode active material, a sodium-ion battery and a preparation method therefor and an electrical device, so as to solve the above problems.

In order to achieve the above objective, the present invention adopts the following technical solutions.

A positive electrode active material is provided, where the positive electrode active material includes a polyanionic material and Na₄Fe₃(PO₄)₂P₂O₇, a mass of the Na₄Fe₃(PO₄)₂P₂O₇ being 40% to 60% of a mass of the positive electrode active material.

According to embodiments of the present invention, the polyanionic material includes at least one of ferric sodium phosphate and ferric sodium pyrophosphate.

The present invention further provides a sodium-ion battery, including a positive electrode, a negative electrode and an electrolytic solution, where a raw material for preparing the positive electrode includes the positive electrode active material described in the preceding; a raw material for preparing the negative electrode includes a negative electrode active material, the negative electrode active material including natural graphite; and the electrolytic solution includes an ethers electrolytic solution.

According to embodiments of the present invention, the ethers electrolytic solution includes an electrolyte and a solvent, where the electrolyte includes NaPF₆, and the solvent includes DME, DG and TG; and/or
in the ethers electrolytic solution, the electrolyte has a concentration ranging from 1 mol/L to 1.8 mol/L

The present invention further provides a preparation method for the sodium-ion battery as described in the preceding, including: formulating a positive electrode slurry using a positive electrode active material, and coating the positive electrode slurry on a first current collector, so as to render a positive electrode; formulating a negative electrode slurry using a negative electrode active material, and coating the negative electrode slurry on a second current collector, so as to render a negative electrode; and assembling the positive electrode, the negative electrode and the electrolytic solution, so as to render the sodium-ion battery.

According to embodiments of the present invention, the formulating the positive electrode slurry using the positive electrode active material includes: mixing the positive electrode active material with a first binder, a first conductive agent and a first solvent, so as to render the positive electrode slurry, where
the first binder includes polyvinylidene difluoride;
the first conductive agent includes at least one of carbon nanotubes, conductive carbon black, conductive graphite, graphene, and acetylene black; and
the first solvent includes N-methylpyrrolidone.

According to embodiments of the present invention, the first current collector includes an aluminum foil.

According to embodiments of the present invention, formulating the negative electrode slurry using the negative electrode active material includes: mixing the negative electrode active material with a second binder, a second conductive agent and a second solvent, so as to render the negative electrode slurry, where
the second binder includes at least one of styrene-butadiene rubber and carboxymethyl cellulose; and
the second conductive agent includes at least one of carbon nanotubes, conductive carbon black, conductive graphite, graphene, and acetylene black.

According to embodiments of the present invention, the second current collector includes an aluminum foil; and/or
the positive electrode is welded with a positive tab, and the negative electrode is welded with a negative tab; and a material of the positive tab and a material of the negative tab each independently include aluminum, nickel or aluminum-to-nickel conversion.

The present invention further provides an electrical device, where the electrical device includes the sodium-ion battery as described in the preceding or includes the sodium-ion battery prepared by the preparation method as described in the preceding.

Compared with the prior art, the present invention has following beneficial effects.

In the present invention, the polyanionic material and Na₄Fe₃(PO₄)₂P₂O₇ are compounded as the positive electrode active material. The two materials cooperate with each other, so that the positive electrode active material has a high diffusion coefficient of Na⁺, a high energy density and excellent cycle stability at a low temperature, which is beneficial to improving the low-temperature service performance of the sodium-ion battery.

The present invention further provides a sodium-ion battery. The sodium-ion battery uses the above positive electrode active material, so that the sodium-ion battery has an excellent diffusion coefficient of Na⁺ and a high energy density at a low temperature. Moreover, the sodium-ion battery uses natural graphite as a negative electrode active material, the natural graphite negative electrode has a solvent co-intercalation layer charge storage mechanism, and the sodium ions can store charge in the absence of a desolvation process, thereby being beneficial to improving the low-temperature service performance of the sodium-ion battery. In addition, the sodium-ion battery uses the ethers electrolytic solution, where the ethers electrolytic solution has a low freezing point, can avoid the problem of freezing of the electrolytic solution at a low temperature, and can improve the low-temperature service performance of the sodium-ion battery. In summary, the sodium-ion battery of the present invention has excellent low-temperature resistance, excellent cycle performance, and a low production cost. The sodium-ion battery of the present invention has a wide range of service temperatures, and still has excellent electrochemical performance even in a low-temperature environment of -40 °C, thus having remarkable market competitiveness.

The sodium-ion battery prepared by the preparation method for a sodium-ion battery of the present invention still has excellent electrochemical performance in a low-temperature environment. In addition, the preparation method also has the advantages of simple operation and a low production cost, and is beneficial to large-scale promotion and application.

The electrical device using the sodium-ion battery of the present invention can be used at a low temperature, thus expanding service temperatures of existing electrical devices.

### BRIEF DESCRIPTION OF DRAWINGS

In order to more clearly illustrate technical solutions of embodiments of the present invention, drawing that needs to be used in the embodiments will be briefly introduced below. It should be understood that the drawing shows merely some embodiments of the present invention, and thus should not be considered as limitation to the scope of the present invention.

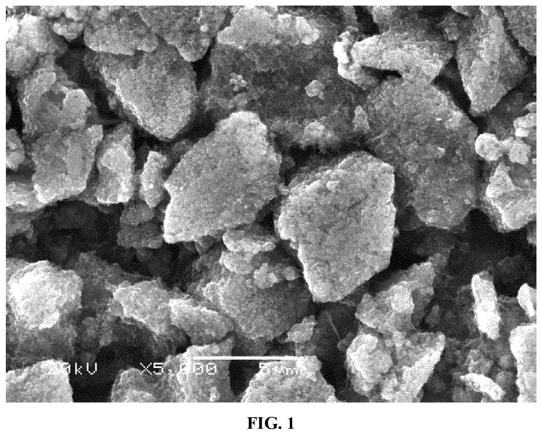

FIG. 1 is a scanning electron micrograph of a positive electrode plate in Example 1.

### DETAILED DESCRIPTION OF EMBODIMENTS

In order to better illustrate technical solutions provided in the present invention, before the examples, an overall statement is first made for the technical solutions, specifically as follows.

The present invention provides a positive electrode active material, where the positive electrode active material includes a polyanionic material and Na₄Fe₃(PO₄)₂P₂O₇, a mass of the Na₄Fe₃(PO₄)₂P₂O₇ being 40% to 60% of a mass of the positive electrode active material.

As a Fe²⁺-containing blended phosphate compound, Na₄Fe₃(PO₄)₂P₂O₇ belongs to an orthorhombic crystal system and has a space group Pn21a, where FeO₆ octahedrons are connected via a common side or a common corner, PO₄ tetrahedrons are connected to these FeO₆ octahedrons, thus constituting layered units along an axial plane, these layered units being connected by P₂O₇ groups in a horizontal-axis direction, to form a three-dimensional framework structure, which means that there are diffusion channels of sodium ions in all three directions of a three-dimensional space. This structure has four different sodium sites, which facilitates intercalation and deintercalation of sodium ions, accelerates a dissolution process of Na⁺ at an electrode-electrolytic solution interface, and reduces a degree of electrode polarization, thus enabling the electrode to have a sufficiently large discharge capacity and to operate at low temperatures. That is to say, structural characteristics of Na₄Fe₃(PO₄)₂P₂O₇ is beneficial to diffusion of sodium ions. The polyanionic material has a 3D network structure, has an excellent Na⁺ diffusion path, still has a high diffusion rate of Na⁺ and excellent cycle stability under low-temperature conditions, and can ensure that the battery can realize rapid reaction kinetics. In a low-temperature environment, Na₄Fe₃(PO₄)₂P₂O₇ exhibits a more excellent mean discharge pressure (about 3.2 V) than the polyanionic material. When charge and discharge are performed, Na⁺ of Na₄Fe₃(PO₄)₂P₂O₇ will undergo a solid solution reaction of local lattice deformation in a process of deintercalation or intercalation, in which process volume change is small, thus being conducive to maintaining stability of a crystal structure thereof. When the mass of Na₄Fe₃(PO₄)₂P₂O₇ is 40% to 60% of the mass of the positive electrode active material, the positive electrode is enabled to have excellent electrochemical performance, and specifically, a sodium-ion battery is enabled to stably operate in a low-temperature condition of -40 °C. If a content of Na₄Fe₃(PO₄)₂P₂O₇ added is too small, on the one hand, the prepared sodium-ion battery cannot be ensured to run at -40 °C, and on the other hand, a battery cost will be increased. If too much Na₄Fe₃(PO₄)₂P₂O₇ is added, an energy density of the sodium-ion battery is too low, because a theoretical specific capacity of Na₄Fe₃(PO₄)₂P₂O₇ is lower than that of the polyanionic material, for example, the theoretical specific capacity of Na₄Fe₃(PO₄)₂P₂O₇ is 129 mAh/g, while the theoretical specific capacity of the polyanionic material ferric sodium phosphate is 154 mAh/g. In addition, structural stability of the polyanionic material avoids safety problems such as overcharge and overdischarge. If the content of Na₄Fe₃(PO₄)₂P₂O₇ is too large, the content of the polyanionic material is relatively reduced, which may cause battery safety and other relevant problems. In general, the positive electrode active material of the present invention has a high diffusion coefficient of Na⁺, a high energy density and excellent cycle stability at a low temperature, which is beneficial to improving low-temperature service performance of the sodium-ion battery.

Exemplarily, the mass of the Na₄Fe₃(PO₄)₂P₂O₇ is 40%, 41%, 42%, 43%, 44%, 45%, 46%, 47%, 48%, 49%, 50%, 51%, 52%, 53%, 54%, 55%, 56%, 57%, 58%, 59% or 60% of the mass of the positive electrode active material.

According to embodiments of the present invention, the polyanionic material includes at least one of ferric sodium phosphate (NaFePO₄) and ferric sodium pyrophosphate (Na₈Fe₄(P₂O₇)₅). When the above polyanionic material is mixed with Na₄Fe₃(PO₄)₂P₂O₇, a framework structure of blended phosphate and pyrophosphate ions can be present stably and constitute a sodium ion compound, which is beneficial to improving the service performance of the sodium-ion battery at a low temperature. Moreover, the above polyanionic material has a low cost, which is beneficial to reducing the production cost of the sodium-ion battery and improving market competitiveness.

The present invention further provides a sodium-ion battery, including a positive electrode, a negative electrode and an electrolytic solution, where a raw material for preparing the positive electrode includes the positive electrode active material described in the preceding; a raw material for preparing the negative electrode includes a negative electrode active material, the negative electrode active material including natural graphite; and the electrolytic solution includes an ethers electrolytic solution.

The raw material for preparing the positive electrode in the sodium-ion battery includes the positive electrode active material described in the preceding, which is beneficial for the sodium-ion battery to have an excellent diffusion rate of Na⁺ at a low temperature. The raw material for forming the negative electrode includes natural graphite, and Na⁺ and solvent molecules can be co-embedded in the natural graphite, which not only can realize quick reaction kinetics, but also shows potential for low-temperature operation. In addition, when Na⁺ is stored, an average discharge plateau of a natural graphite negative electrode relative to Na/Na⁺ is about 0.6 V, which can effectively avoid a risk of Na plating layer due to increased battery polarization under low-temperature conditions. In addition, the natural graphite has excellent thermal stability, and is more suitable for low-temperature sodium-ion batteries than conventional negative electrode active materials (such as hard carbon). In addition, low-temperature freezing of the electrolytic solution having a high freezing point limits the low-temperature service performance of the battery. In order to solve the technical problem, the present invention uses the ethers electrolytic solution, and as the ethers electrolytic solution has a lower freezing point and higher electrical conductivity than other types of electrolytic solutions (such as an ester-based electrolytic solution), it is beneficial to improving the low-temperature operation performance of the sodium-ion battery.

According to embodiments of the present invention, the ethers electrolytic solution includes an electrolyte and a solvent, where the electrolyte includes NaPF₆, and the solvent includes DME, DG and TG. Thus, an efficient and stable ion conduction environment can be provided for the sodium-ion battery, and the high performance and long service lifetime of the sodium-ion battery can be ensured.

Further, a mass ratio of DME to DG, TG is 4:2:1.

And/or, in the ethers electrolytic solution, the electrolyte has a concentration ranging from 1 mol/L to 1.8 mol/L, for example, the concentration of the electrolyte can be 1 mol/L, 1.1 mol/L, 1.2 mol/L, 1.3 mol/L, 1.4 mol/L, 1.5 mol/L, 1.6 mol/L, 1.7 mol/L, or 1.8 mol/L. In the above concentration range, the ethers electrolytic solution can provide moderate ion mobility, which is beneficial to rapid transmission of sodium ions in the electrolytic solution, thus improving charging and discharging efficiency and power density of the battery.

In addition to the positive electrode, the negative electrode and the electrolytic solution, the sodium-ion battery can further include indispensable structures in a conventional sodium-ion battery, for example, the sodium-ion battery can further include a separator and a steel shell.

The present invention further provides a preparation method for the sodium-ion battery as described in the preceding, including: formulating a positive electrode slurry using a positive electrode active material, and coating the positive electrode slurry on a first current collector, so as to render a positive electrode; formulating a negative electrode slurry using a negative electrode active material, and coating the negative electrode slurry on a second current collector, so as to render a negative electrode; and assembling the positive electrode, the negative electrode and the electrolytic solution, so as to render the sodium-ion battery.

The sodium-ion battery prepared by this preparation method has excellent electrochemical performance in a low-temperature environment. In addition, the preparation method further has the advantages of simple operation and low production cost, and facilitates large-scale promotion and application.

According to embodiments of the present invention, formulating the positive electrode slurry using the positive electrode active material includes: mixing the positive electrode active material with a first binder, a first conductive agent and a first solvent, so as to render the positive electrode slurry.

The first binder includes polyvinylidene difluoride (PVDF).

The first conductive agent includes at least one of carbon nanotubes, conductive carbon black, conductive graphite, graphene, and acetylene black.

The first solvent includes N-methylpyrrolidone.

Exemplarily, a mass ratio of the positive electrode active material to the first binder and the first conductive agent can be 96.5:2.5:3.5, the first conductive agent can include conductive carbon black and carbon nanotubes, and a mass ratio of the conductive carbon black to the carbon nanotubes can be 2:1.5. The positive electrode slurry has a solid content ranging from 50% to 60%.

According to embodiments of the present invention, the first current collector includes an aluminum foil. Further, the aluminum foil includes at least one of a carbon-coated aluminum foil, a corona aluminum foil, and an ordinary aluminum foil.

Further, after the positive electrode slurry is coated on the first current collector, the preparation method further includes: performing drying, rolling, and slitting, so as to render the positive electrode.

According to embodiments of the present invention, formulating the negative electrode slurry using the negative electrode active material includes: mixing the negative electrode active material with a second binder, a second conductive agent and a second solvent, so as to render the negative electrode slurry.

The second binder includes at least one of styrene-butadiene rubber (SBR) and carboxymethyl cellulose (CMC).

The second conductive agent includes at least one of carbon nanotubes, conductive carbon black, conductive graphite, graphene, and acetylene black.

Further, the second solvent includes water.

Exemplarily, a mass ratio of the negative electrode active material to the second binder, the second conductive agent, and the second solvent is 94.5:5.755:4.55:110, the second binder can include styrene-butadiene rubber and carboxymethyl cellulose, a mass ratio of the styrene-butadiene rubber to the carboxymethyl cellulose is 4.2:1.555, the second conductive agent can include conductive carbon black and carbon nanotubes, and a mass ratio of the conductive carbon black to the carbon nanotubes is 1.55:3.

Further, the negative electrode slurry has a solid content ranging from 40% to 45%.

According to embodiments of the present invention, the second current collector includes an aluminum foil.

Further, after the negative electrode slurry is coated on the second current collector, the preparation method further includes: performing drying, rolling, and slitting, so as to render the negative electrode.

And/or, the positive electrode is welded with a positive tab, and the negative electrode is welded with a negative tab; and a material of the positive tab and a material of the negative tab each independently include aluminum, nickel or aluminum-to-nickel conversion. The positive tab is connected to the positive electrode, and the negative tab is connected to the negative electrode, so that smooth flow of electric energy during charging and discharging of the battery can be ensured.

The present invention further provides an electrical device, where the electrical device includes the sodium-ion battery described in the preceding or includes the sodium-ion battery prepared by the preparation method described in the preceding.

The electrical device in the present invention includes consumer electronic products, electric vehicles, portable power supplies and outdoor devices, medical devices, industrial devices, etc. For example, the consumer electronic products include smartphones, notebook computers, tablet computers, wearable devices, etc. The electric vehicles include electric bicycles, electric automobiles, electric ships and drones. The portable power supplies and outdoor devices include mobile power supplies, camping lamps, outdoor adventure kits, etc. The medical devices include portable medical devices, emergency medical devices, etc. The industrial devices include industrial robots, remote monitoring systems, automated guided vehicles, etc.

Implementation solutions of the present invention will be described in detail below in conjunction with specific examples, while those skilled in the art would understand that the following examples are merely used to illustrate the present invention, but should not be considered as limitation to the scope of the present invention. Examples, for which no concrete conditions are specified, are carried out according to conventional conditions or conditions recommended by manufactures. Where manufacturers of reagents or instruments used are not specified, they are conventional products commercially available.

### Example 1

Cylindrical battery model 18650 (diameter less than or equal to 18 mm, height less than or equal to 65 mm) is taken as an example below.

A positive electrode active material in Example 1 included ferric sodium phosphate and Na₄Fe₃(PO₄)₂P₂O₇, where a mass of Na₄Fe₃(PO₄)₂P₂O₇ was 50% of a mass of the positive electrode active material.

Preparation of a positive electrode plate: a positive electrode active material, a binder PVDF, conductive carbon black, and carbon nanotubes were dispersed in N-methylpyrrolidone and mixed uniformly, so as to render a positive electrode slurry, where a mass ratio of the positive electrode active material to the binder PVDF, the conductive carbon black, and the carbon nanotubes was 96.5:2.5:2:1.5. The positive electrode slurry had a solid content ranging from 50% to 60% and viscosity ranging from 2,000 cp to 3,000 cp. The slurry to be coated was uniformly coated on a positive electrode current collector, namely, an aluminum foil, by a coating machine, and an electrode plate was dried, compacted by a roller press mill, and slit by a slitting machine in a way of one-in four-out, so as to render the positive electrode plate.

An electron micrograph of the positive electrode plate is as shown in FIG. 1. It can be seen that particles in the electron micrograph were uniformly dispersed, without a phenomenon of particle aggregation, indicating that the two materials, ferric sodium phosphate and Na₄Fe₃(PO₄)₂P₂O₇, could be uniformly dispersed when being mixed, demonstrating that the two materials were well compatible in chemical and physical properties, and can form a stable mixing system. The uniformly dispersed positive electrode material contributes to improving the electrochemical performance of the electrode plate.

Preparation of a negative electrode plate: a formulation of the negative electrode plate included a negative electrode active material natural graphite, a binder SBR, conductive carbon black, carbon nanotubes, a binder CMC and water. A mass ratio of natural graphite, SBR, conductive carbon black, carbon nanotubes, CMC and deionized water was 94.5:4.2:1.55:3:1.555:110. Firstly, CMC, water and carbon nanotubes were mixed to prepare an adhesive solution (step 1). In addition, the negative electrode active material and the conductive carbon black SP were mixed uniformly by a dry method (step 2), and the prepared adhesive solution was added into mixed dry powder in three times (step 3). The deionized water was added to adjust viscosity of the slurry. The slurry was homogenized overnight, and SBR was added the next day, so as to avoid demulsification of SBR if added too early, so that the slurry was formed to be jelly-like, and prepared into the negative electrode slurry. The negative electrode slurry had a solid content ranging from 40% to 45% and viscosity ranging from 2,000 cp to 2,500 cp. The slurry to be coated was uniformly coated on a negative electrode current collector, namely, an aluminum foil, by a coating machine, and an electrode plate was dried, compacted by a roller press mill, and slit by a slitting machine in a way of one-in four-out, so as to render the negative electrode plate.

Preparation of a sodium-ion battery resistant to -40 °C: the positive electrode plate and the negative electrode plate prepared in the above were welded with a tab and then wound with the separator to render a cell, which was encapsulated with a 18650 steel shell, subjected to spot welding, liquid injection, pre-filling, aging, and capacity sorting, so as to render the sodium-ion battery. In the above, the electrolytic solution used in the process of preparing the sodium-ion battery in Example 1 was an ethers electrolytic solution, where the ethers electrolytic solution included an electrolyte and a solvent, the electrolyte being NaPF₆, the solvent being a mixture of DME, DG, and TG, a mass ratio of DME to DG and TG being 4:2:1, and a concentration of the electrolyte in the ethers electrolytic solution being 1.4 mol/L.

### Example 2

A sodium-ion battery was prepared with reference to the method in Example 1, and the other steps were the same as those in Example 1, except that in the positive electrode active material in Example 2, the mass of Na₄Fe₃(PO₄)₂P₂O₇ was 60% of the mass of the positive electrode active material.

### Example 3

A sodium-ion battery was prepared with reference to the method in Example 1, and the other steps were the same as those in Example 1, except that in the positive electrode active material in Example 3, the mass of Na₄Fe₃(PO₄)₂P₂O₇ was 40% of the mass of the positive electrode active material.

### Example 4

A sodium-ion battery was prepared with reference to the method in Example 1, and the other steps were the same as those in Example 1, except that in Example 4, the positive electrode active material was ferric sodium pyrophosphate and Na₄Fe₃(PO₄)₂P₂O₇, and the mass of Na₄Fe₃(PO₄)₂P₂O₇ was 50% of the mass of the positive electrode active material.

### Example 5

A sodium-ion battery was prepared with reference to the method in Example 4, and the other steps were the same as those in Example 4, except that in Example 5, the mass of Na₄Fe₃(PO₄)₂P₂O₇ was 60% of the mass of the positive electrode active material.

### Example 6

A sodium-ion battery was prepared with reference to the method in Example 4, and the other steps were the same as those in Example 4, except that in Example 6, the mass of Na₄Fe₃(PO₄)₂P₂O₇ was 40% of the mass of the positive electrode active material.

### Comparative Example 1

A sodium-ion battery was prepared with reference to the method in Example 1, and the other steps were the same as those in Example 1, except that in Comparative Example 1, the mass of Na₄Fe₃(PO₄)₂P₂O₇ was 20% of the mass of the positive electrode active material.

### Comparative Example 2

A sodium-ion battery was prepared with reference to the method in Example 1, and the other steps were the same as those in Example 1, except that in Comparative Example 2, hard carbon was used in the negative electrode active material.

### Comparative Example 3

A sodium-ion battery was prepared with reference to the method in Example 1, and the other steps are the same as those in Example 1, except that in Comparative Example 3, an ester electrolytic solution was used as the electrolytic solution, the electrolyte was NaPF₆, and the solvent in the electrolytic solution was a mixture of DMC, EMC, PC, and EC, where a mass ratio of DMC to EMC, PC, and EC was 1:1:1:2, and the electrolyte had a concentration of 1.4 mol/L.

### Comparative Example 4

A sodium-ion battery was prepared with reference to the method in Example 1, and the other steps were the same as those in Example 1, except that in Comparative Example 4, the positive electrode active material was a layered O3 phase oxide material, sodium copper-nickel-iron-manganese oxide (Na[Cu_{1/9}Ni_{2/9}Fe_{1/3}Mn_{1/3}]O₂), from HiNa Battery Technology Co., Ltd. (model CFM002R).

### Performance test

The sodium-ion batteries in Examples 1-6 and Comparative Examples 1-4 were tested for performance by following testing methods.

The sodium-ion batteries in Examples 1-6 and Comparative Examples 1-4 were placed in environments at -10 °C, -20 °C, and -40 °C, and subjected to a small-rate current charging and discharging test. The batteries firstly stood in a freezer at -10 °C, -20 °C, and -40 °C for 3 h, respectively, and then subjected to next step of test. (1) The batteries were charged to 3.7 V at constant voltage at 0.2 C, and cut off at 0.01 C; (2) stood for 10 min; (3) were discharged to 1.5 V at 0.2 C; and (4) stood for 10 min; the batteries were tested for 250 cycles of (1)-(4), and capacity retention rates were recorded. A design capacity of the sodium-ion batteries was 1 Ah. In the above, a small-rate current charging and discharging test method was: charging the batteries at 0.2 C and discharging at 0.2 C within a voltage range of 1.5-3.7 V, and performing 250 cycles or more at - 40 °C, where the capacity retention rate greater than or equal to 60% indicated that the batteries passed the test. Each experimental group used 16 batteries to perform parallel experiment, and the batteries used in the experiment had relatively good consistency. Passing rate refers to a ratio of the number of batteries passing the test to all the batteries participating in the test. The passing rates of Examples 1-6 and Comparative Examples 1-4 are shown in TABLE 1.

**TABLE 1 Table of Results of Small-rate Current Charging and Discharging Test of Examples 1-6 and Comparative Examples 1-4**

| Experimental group | Low-temperature cycle test | Passing rate |
|---|---|---|
| Example 1 | -40 °C | 100% |
| Example 2 | -40 °C | 94% |
| Example 3 | -40 °C | 94% |
| Example 4 | -40 °C | 100% |
| Example 5 | -40 °C | 94% |
| Example 6 | -40 °C | 94% |
| Comparative Example 1 | -40 °C | 50% |
| Comparative Example 2 | -40 °C | 13% |
| Comparative Example 3 | -40 °C | 0 |
| Comparative Example 4 | -40 °C | 31% |

The cycle test passing rates of Examples 1-6 at -40 °C were greater than those of Comparative Examples 1-4, indicating that when the positive electrode active material includes the polyanionic material and Na₄Fe₃(PO₄)₂P₂O₇, the mass of Na₄Fe₃(PO₄)₂P₂O₇ is 40% to 60% of the mass of the positive electrode active material, the negative electrode active material is natural graphite, and the electrolytic solution is the ethers electrolytic solution, the sodium ions can have a longer service lifetime at the low temperature of -40 °C. Moreover, the passing rates of Examples 1 and 4 were greater than those of Examples 2, 3, 5 and 6, indicating that the mass of Na₄Fe₃(PO₄)₂P₂O₇ in the mass of the positive electrode active material is preferably 50%, in which case, the sodium-ion battery has more excellent low-temperature cycle performance.

TABLE 1 discloses statistical passing rates of 16 parallel experimental tests, and TABLE 2 shows test data of one of the experiments.

**TABLE 2 Table of Cycle Test Results of Examples 1-6 and Comparative Examples 1-4 at Low Temperatures**

| Experimental group | | First-cycle discharge capacity/mAh | Discharge capacity after 250 cycles/mAh | Capacity retention rate |
|---|---|---|---|---|
| Example 1 | -10 °C | 1054.2 | 1014.1 | 96.2% |
| | -20 °C | 1008.5 | 918.7 | 91.1% |
| | -40 °C | 968.5 | 737.0 | 76.1% |
| Example 2 | -10 °C | 1110.1 | 1081.2 | 97.4% |
| | -20 °C | 1002.3 | 901.0 | 89.9% |
| | -40 °C | 889.1 | 546.8 | 61.5% |
| Example 3 | -10 °C | 1040.3 | 993.5 | 95.5% |
| | -20 °C | 1001.3 | 903.1 | 90.2.% |
| | -40 °C | 864.2 | 552.2 | 63.9% |
| Example 4 | -10 °C | 1052.1 | 1007.9 | 95.8% |
| | -20 °C | 1025.8 | 949.9 | 92.6% |
| | -40 °C | 978.4 | 696.6 | 71.2% |
| Example 5 | -10 °C | 1048.5 | 988.7 | 94.3% |
| | -20 °C | 1000.4 | 895.4 | 89.5% |
| | -40 °C | 878.8 | 527.3 | 60.0% |
| Example 6 | -10 °C | 1049.8 | 998.4 | 95.1% |
| | -20 °C | 1001.8 | 913.6 | 91.2% |
| | -40 °C | 895.7 | 568.7 | 63.5% |
| Comparative Example 1 | -10 °C | 1002.1 | 1001.9 | 91% |
| | -20 °C | 986.2 | 710.2 | 79% |
| | -40 °C | 774 | 0 | 0% |
| Comparative Example 2 | -10 °C | 1101.2 | 1046.1 | 95% |
| | -20 °C | 1096 | 712.4 | 65% |
| | -40 °C | 996.8 | 0 | 0% |
| Comparative Example 3 | -10 °C | 1023.6 | 921.2 | 90% |
| | -20 °C | 1011.9 | 0 | 0 |
| | -40 °C | 898.4 | 0 | 0 |
| Comparative Example 4 | -10 °C | 1112.8 | 1079.4 | 97% |
| | -20 °C | 1109.7 | 987.6 | 89% |
| | -40 °C | 996.7 | 0 | 0 |

It can be seen from TABLE 2 that all of Examples 1-6 could maintain the capacity retention rate of 60% or more after 250 cycles under the condition of -40 °C, and the capacity retention rates of Comparative Examples 1-4 were all 0 after 250 cycles in the -40 °C environment. That is to say, the low-temperature performance of the sodium-ion batteries of Examples 1-6 is superior to that of Comparative Examples 1-4. A composite of the polyanionic material and Na₄Fe₃(PO₄)₂P₂O₇ was used as the positive electrode active material of the present invention, the mass of Na₄Fe₃(PO₄)₂P₂O₇ was 40% to 60% of the mass of the positive electrode active material, and the natural graphite and ethers electrolytic solution were used as the negative electrode active material, so that the prepared sodium-ion batteries had excellent low-temperature resistance.

In addition, after 5 low-temperature cycles, the batteries of Example 1 and Comparative Example 1 were disassembled. After disassembly, it can be seen that there was no sodium precipitation on a surface of the negative electrode plate of Example 1, and it can be preliminarily determined that in the initial cycle of the battery of Example 1 at a low temperature, intercalation and deintercalation of sodium ions were normal. The negative electrode plate of Comparative Example 1 had dense white spots, indicating serious sodium precipitation, affecting later cycles of the battery. The negative electrode plates of Examples 2-6 after 5 low-temperature cycles had a similar situation to Example 1, and the negative electrode plates of Comparative Examples 2-3 after 5 low-temperature cycles had a similar situation to Comparative Example 1, indicating that the batteries of the Examples had more excellent electrochemical performance and cycle performance than those of the Comparative Examples.

Finally, it should be noted that various examples above are merely used for describing the technical solutions of the present invention, rather than limiting the present invention; while the detailed description is made to the present invention with reference to various preceding examples, those ordinarily skilled in the art should understand that they still could modify the technical solutions described in the various preceding examples, or make equivalent substitutions to some or all of the technical features therein; and these modifications or substitutions do not make the essence of corresponding technical solutions depart from the scope of the technical solutions of the various examples of the present invention.

## Claims

1. A positive electrode active material, **characterized in that** the positive electrode active material comprises a polyanionic material and Na₄Fe₃(PO₄)₂P₂O₇, a mass of the Na₄Fe₃(PO₄)₂P₂O₇ being 40% to 60% of a mass of the positive electrode active material.

2. The positive electrode active material according to claim 1, wherein the polyanionic material comprises at least one of ferric sodium phosphate and ferric sodium pyrophosphate.

3. A sodium-ion battery, **characterized by** comprising a positive electrode, a negative electrode and an electrolytic solution, wherein
a raw material for preparing the positive electrode comprises the positive electrode active material according to claim 1 or 2;
a raw material for preparing the negative electrode comprises a negative electrode active material, the negative electrode active material comprising natural graphite; and
the electrolytic solution comprises an ethers electrolytic solution.

4. The sodium-ion battery according to claim 3, wherein the ethers electrolytic solution comprises an electrolyte and a solvent, wherein the electrolyte comprises NaPF₆, and the solvent comprises DME, DG and TG; and/or
in the ethers electrolytic solution, the electrolyte has a concentration ranging from 1 mol/L to 1.8 mol/L.

5. A preparation method for the sodium-ion battery according to claim 3 or 4, **characterized by** comprising:
formulating a positive electrode slurry using the positive electrode active material, and coating the positive electrode slurry on a first current collector, so as to render the positive electrode;
formulating a negative electrode slurry using the negative electrode active material, and coating the negative electrode slurry on a second current collector, so as to render the negative electrode; and
assembling the positive electrode, the negative electrode and the electrolytic solution, so as to render the sodium-ion battery.

6. The preparation method according to claim 5, wherein the formulating a positive electrode slurry using the positive electrode active material comprises: mixing the positive electrode active material with a first binder, a first conductive agent and a first solvent, so as to render the positive electrode slurry, wherein
the first binder comprises polyvinylidene difluoride;
the first conductive agent comprises at least one of carbon nanotubes, conductive carbon black, conductive graphite, graphene, and acetylene black; and
the first solvent comprises N-methylpyrrolidone.

7. The preparation method according to claim 6, wherein the first current collector comprises an aluminum foil.

8. The preparation method according to claim 5, wherein the formulating a negative electrode slurry using the negative electrode active material comprises: mixing the negative electrode active material with a second binder, a second conductive agent and a second solvent, so as to render the negative electrode slurry, wherein
the second binder comprises at least one of styrene-butadiene rubber and carboxymethyl cellulose; and
the second conductive agent comprises at least one of carbon nanotubes, conductive carbon black, conductive graphite, graphene, and acetylene black.

9. The preparation method according to claim 8, wherein the second current collector comprises an aluminum foil; and/or
the positive electrode is welded with a positive tab, and the negative electrode is welded with a negative tab; and a material of the positive tab and a material of the negative tab each independently comprise aluminum, nickel or aluminum-to-nickel conversion.

10. An electrical device, **characterized in that** the electrical device comprises the sodium-ion battery according to claim 3 or 4 or comprises the sodium-ion battery prepared by the preparation method according to any one of claims 5-9.
